Europäisches Patentamt

European Patent Office

Office européen des brevets

(19)

(11) Publication number: **0 253 616**
A1

(12)

# EUROPEAN PATENT APPLICATION

(21) Application number: **87306192.3**

(22) Date of filing: **14.07.87**

(51) Int. Cl.⁴: **C 08 F 6/08**
C 08 F 10/00

(30) Priority: **15.07.86 US 885909**

(43) Date of publication of application:
**20.01.88 Bulletin 88/03**

(84) Designated Contracting States:
**AT BE DE FR GB IT NL SE**

(71) Applicant: **MOBIL OIL CORPORATION**
**150 East 42nd Street**
**New York New York 10017 (US)**

(72) Inventor: **Lottes, James Frederick**
**1477 Schirra Drive**
**Ambler Pennsylvania 19002 (US)**

**Yarmoska, Bruce Steven**
**186 Bywater Way**
**Sommerville New Jersey 08876 (US)**

**Tsien, Grace On-Kee**
**78 Elm Street**
**Colonia New Jersey 07067 (US)**

(74) Representative: **Colmer, Stephen Gary**
**Patent Department c/o Mobil Services Company Limited**
**Mobil Court 3 Clements Inn**
**London WC2A 2EB (GB)**

(54) **Process of producing polyethylenes having reduced odor and improved color.**

(57) Polymer resins prepared by polymerizing alpha-olefins in the presence of high activity Ziegler and/or Ziegler-Natta polymerization catalyst compositions are treated with at least one alcohol of the formula
R″ - OH
wherein R″ is a $C_1$-$C_{10}$ alkyl, alkenyl, aryl, alkaryl or aralkyl group.

The alcohol must be used in the vapor phase. The treatment with the alcohol eliminates the odor and discoloration of the products, especially injection molded products, produced from the resins.

EP 0 253 616 A1

Bundesdruckerei Berlin

**Description**

## PROCESS OF PRODUCING POLYETHYLENES HAVING REDUCED ODOR AND IMPROVED COLOR

The present invention is directed to an improved process of producing polyethylene with high activity alpha-olefin polymerization catalysts, also known as high activity, Ziegler or Ziegler-Natta catalyst compositions. More particularly, the invention is directed to the production of polymers of alpha-olefins which do not contain objectionable odor and color characteristics frequently present in the polymers of prior art.

Until recently, polymers of $C_2$-$C_{10}$ alpha-olefins were prepared with relatively low activity alpha-olefin polymerization catalyst compositions. Such polymerization catalysts exhibited the productivity of less than about 400 grams of polymer per gram of catalyst per hour. Due to the low activity of such catalysts, the product polymers contained a substantial amount of catalyst residue which had to be removed therefrom to produce a commercially acceptable polymer product. The catalyst residue was usually removed by washing the polymer product with a suitable agent, such as water or an aqueous solution of alcohol, e.g., methanol or ethanol, for a sufficient time to produce a polymer resin containing acceptable amounts (e.g., less than 10 parts per million, ppm) of titanium, e.g., see Shiga et al, U.S. Patent 4,182,582 and Ainsworth, Jr. et al, U.S. Patent 3,773,743.

In recent years, however, more efficient alpha-olefin polymerization catalyst compositions have been discovered. Such catalyst compositions, when used to prepare polymers of alpha-olefins, leave only minute amounts of the catalyst in the product due to their high efficiency. Accordingly, it has not been deemed to be necessary to wash the polymer product to remove the catalyst residue therefrom. However, certain products, e.g. injection-molded containers fabricated from the polymers produced with such high activity catalyst compositions, under certain conditions exhibit objectionable odor and color. Injection-molded products have an odor which may be especially objectionable in food container applications. The injection-molded products may also have a slight yellow tint which is objectionable in certain applications.

The present invention provides a process of preparing a polymer resin of at lesat one $C_2$-$C_{10}$ alpha-olefin comprising conducting the polymerization in the presence of a high activity catalyst composition having a productivity of at least 500 grams of polymer per gram of catalyst per hour, the catalyst composition comprising a magnesium or a compound thereof, a transition metal or a compound thereof, a halogen or a compound thereof, and a catalyst activator, characterized in that the polymer resin is contacted, after the polymerization is substantially completed, with at least one alcohol of the formula
R″ - OH
wherein R″ is a $C_1$-$C_{10}$ alkyl, alkenyl, aryl, alkaryl or aralkyl group.

The amount of the alcohol is at least about stoichiometrically equivalent to the molar amount of the metal of the catalyst activator in the polymer resin. At the time of contact of the resin with the alcohol, the alcohol must be in vapor phase. Accordingly, the temperature of the vessel wherein the contacting takes place must be higher than the dew point of the alcohol or alcohols at the operating pressure of the vessel and the concentration of the alcohol (or alcohols) in the vessel.

The high efficiency catalyst compositions, used in this invention, are Ziegler and/or Ziegler-Natta alpha-olefin polymerization catalysts comprising magnesium or a magnesium compound, a transition metal or a transition metal compound, preferably titanium and/or vanadium, or compounds thereof, a halogen, e.g., chlorine, and a catalyst activator. The high efficiency catalyst compositions exhibit a productivity of at least about 500, preferably about 1,000 to about 50,000, and most preferably about 2,000 to about 20,000 grams of polymer per gram of catalyst per hour. The catalyst may be supported on an inert support, e.g., see Karol et al, U.S. Patent 4,302,566 and Nowlin et al, U.S. Patent 4,481,301, or unsupported, e.g., Yamaguchi et al, U.S. Patent 3,989,881. Suitable catalyst compositions are disclosed, for example, by Yamaguchi et al, U.S. Patent 3,989,881; Nowlin et al, U.S. Patent 4,481,301; Goeke et al, U.S. Patent 4,354,009; Karol et al, U.S. Patent 4,302,566; Strobel et al, U.S. Patent 4,148,754; and Ziegler, Deceased, et al, U.S. Patent 4,063,009.

The treatment of the polymerized resin with the alcohol in accordance with the present invention substantially eliminates the objectionable odor and color characteristics of the polymer products produced from the resin.

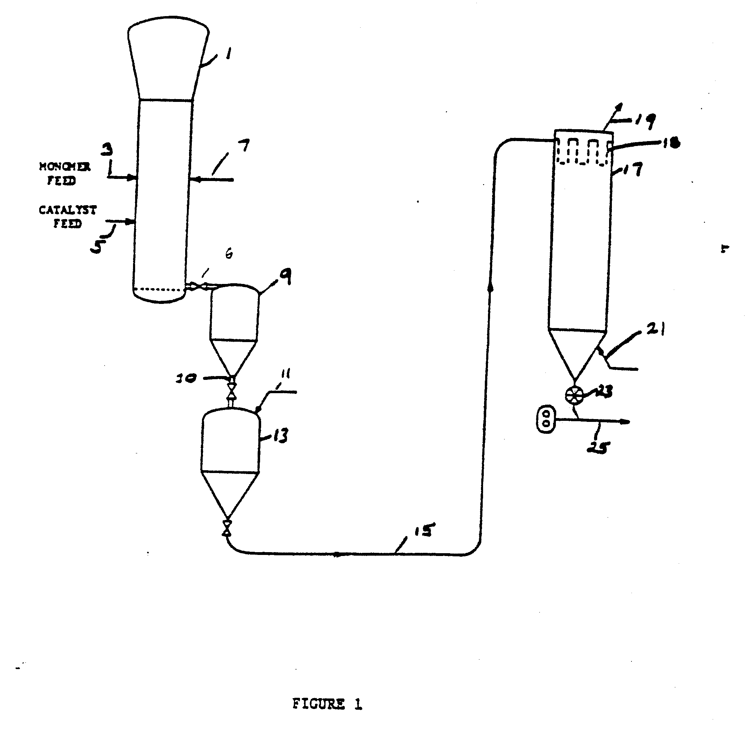

The Figure is a schematic representation of one embodiment of the invention.

The polymerization process used in conjunction with the present invention can be any alpha-olefin polymerization process known to those skilled in the art. Such processes include polymerizations carried out in suspension, in solution or in the gas phase. Gas phase, fluid bed polymerization process and reactor, are disclosed, for example, by Nowlin et al, U.S. Patent 4,481,301 and Karol et al, U.S. Patent 4,302,566, and by Jenkins et al, European Patent Application 0 089 691, published on September 28, 1983. Gas phase polymerization reactions are preferred, e.g., those taking place in stirred bed reactors and, especially, fluidized bed reactors.

The catalyst compositions used in the alpha-olefin polymerization process comprise magnesium or a compound thereof, a transition metal or a compound thereof, and a halogen or a compound thereof. The magnesium or magnesium compound component of the catalyst is supplied during catalyst synthesis by any magnesium compounds used heretofore in Ziegler and/or Ziegler-Natta high activity catalyst compositions synthesis. Non-limiting examples of such compounds are magnesium halides, such as $MgCl_2$ or $MgI_2$, or organomagnesium compositions,

such as the compositions having the empirical formula

$$R_nMgR'_{(2-n)}$$

where R and R' are the same or different $C_1$-$C_{12}$ hydrocarbyl groups, provided that R' may also be a halogen, and n is 0, 1 or 2.

The transition metal or transition compound component is supplied during catalyst synthesis by any transition metal compounds used in synthesizing the Ziegler and/or Ziegler-Natta high activity catalyst compositions. Suitable transition metal compounds are compounds of a transition metal of Group IVA, VA, VIA, VIIA or VIII of the Periodic Chart of the Elements, as published by the Fisher Scientific Company, Catalog Number 5-702-10, 1978. Such compounds are any transition metal compounds used heretofore in Ziegler and Ziegler-Natta catalyst compositions. Non-limiting examples of such transition metal compounds are compounds of titanium, vanadium, molybdenum, zirconium or chromium, e.g., $TiCl_3$, $TiCl_4$, $VCl_3$, $VCl_4$, $VOCl_3$, dialkoxy vanadium dichlorides, $MoCl_5$, $ZrCl_4$ and chromiumacetylacetonate. Of these compounds, the compounds of titanium and/or vanadium are preferred, and the compounds of titanium are most preferred.

The high activity catalyst composition also contains a halogen, e.g., bromine or chlorine, preferably chlorine, usually supplied to the catalyst from a halogenated magnesium or halogenated transition metal compound, such as halogenated titanium or halogenated vanadium.

The catalyst composition may be supported or unsupported, as is known to those skilled in the art. If the catalyst composition is supported on a support, any of the heretofore-used alpha-olefin polymerization supports may be utilized. Suitable supports are magnesium compounds used as the source of a magnesium, discussed above, and porous carrier materials, such as silica, alumina and combinations thereof disclosed, for example, by Nowlin et al, U.S. Patent 4,481,301, as well as silica-alumina, silica-titania, zirconium or thoria.

In the preferred embodiments, the catalysts used in this invention and the process for polymerizing alpha-olefin polymers are substantially those disclosed by Karol et al, U.S. Patent 4,302,566 and Karol et al, European Published Patent Application, Application No. 84103441.6, filed on March 28, 1984, Publication No 0 120 503, published on October 3, 1984.

The thus-formed catalyst is activated with suitable activators, also known as co-catalysts or catalyst promoters. The activators are known in the art and they include any of the materials commonly employed as promoters for olefin polymerization catalyst comoponents containing compounds of the Group IB, IIA, IIB, IIIB and IVB of the Periodic Chart of the Elements, published by Fisher Scientific Company, Catalog Number 5-702-10, 1978. Examples of such promoters are metal alkyls, hydrides, alkylhydrides, and alkylhalides, such as alkyllithium compounds, dialkylzinc compounds, trialkylboron compounds, trialkylaluminum compounds, alkylaluminum halides and hydrides, and tetraalkylgermanium compounds. Mixtures of promoters can also be employed. Specific examples of useful promoters include n-butyllithium, diethylzinc, di-n-propylzinc, triethylboron, triethylaluminum, triisobutylaluminum, tri-n-hexylaluminum, ethylaluminum dichloride, dibromide, and dihydride, isobutyl aluminum dichloride, dibromide, and dihydride, diethylaluminum chloride, bromide, and hydride, di-n-propylaluminum chloride, bromide, and hydride, diisobutylaluminum chloride, bromide, and hydride, tetramethylgermanium, and tetraethyl-germanium. Organometallic promoters which are preferred for use according to this invention are Group IIIB metal alkyls and diakyl-halides having 1 to about 20 carbon atoms per alkyl radical. More preferably, the promoter is a trialkylaluminum compound having 1 to about 6 carbon atoms per alkyl radical, and the most preferred promoter is triethylaluminum.

The organometallic promoter is employed in an amount which is at least effective to promote the polymerization activity of the solid component of the catalyst of this invention. Preferably, at least about three parts by weight of the promoter are employed per part, by weight, of solid catalyst component, although higher ratios, such as 10:1; 25:1, 100:1 or higher, are also suitable and often give highly beneficial results. In slurry polymerization processes, a portion of the promoter can be employed to pretreat the polymerization medium if desired. Other promoters which can be used herein are disclosed by Stevens et al, U.S. Patent 3,787,384, column 4, line 45 to column 5, line 12, and by Strobel et al, U.S. Patent 4,148,754, column 4, line 56 to column 5, line 59.

The catalyst may be activated in situ by adding the activator and catalyst separately to the polymerization medium. It is also possible to combine the catalyst and the activator before the introduction thereof into the polymerization medium, e.g., for up to 2 hours prior to the introduction thereof into the polymerization medium at a temperature of from about -40 to about 100°C.

A suitable activating amount of the activator may be used to promote the polymerization activity of the catalyst. The aforementioned proportions of the activator can also be expressed in terms of the number of moles of activator per gram atom of transition metal in the catalyst of, e.g., from about 1 to about 100 and preferably greater than about 5.

The molecular weight of the polymer may be controlled in a known manner, e.g., by using hydrogen. Molecular weight may be suitably controlled with hydrogen when the polymerization is carried out at relatively low temperatures, e.g., from about 30 to about 105°C. This control of molecular weight may be evidenced by a measurable positive change in melt index ($I_2$) of the polymer produced.

The linear polyethylene polymers prepared in accordance with the present invention may be homopolymers of ethylene or copolymers of ethylene with one or more $C_3$-$C_{10}$ alpha-olefins. Thus, copolymers having two monomeric units are possible as well as terpolymers having three monomeric units. Particular examples of such polymers include ethylene/1-butene copolymers, ethylene/1-hexene copolymers, ethylene/1-octene copolymers, ethylene/4-methyl-1-pentene copolymers, ethylene/1-butene/1-hexene terpolymers, ethylene/propylene/1-hexene terpolymers and ethylene/propylene/1-butene terpolymers. When propylene is employed as a comonomer, the resulting linear low density polyethylene polymer preferably has at least one other alpha-olefin comonomer having at least four carbon atoms in an amount of at least 1 percent by weight of the polymer. Accordingly, ethylene/propylene copolymers are possible, but not preferred. The most preferred comonomer is 1-hexene.

The linear low density polyethylene polymers treated in accordance with the present invention preferably contain at least about 80 percent by weight of ethylene units. Although the invention is applicable to any polymers produced with the above-described high efficiency catalysts, it is especially applicable to polyethylene resins having a melt index ($I_2$) of at least about 30 since the products made from such resins have the most noticeable odor and discoloration when they are used to manufacture injection-molded products.

A particularly desirable method for producing linear low density polyethylene polymers according to the present invention is in a fluid bed reactor. Such a reactor and means for operating the same is described by Levine et al, U.S. Patent 4,011,382, the entire contents of which are incorporated herein by reference, Karol et al, U.S. Patent 4,302,566, and by Nowlin et al, U.S. Patent 4,481,301.

After the polymerization is completed in any suitable process or apparatus, e.g., a fluidized bed or slurry reactor, the polymer product is usually introduced into a post-polymerization discharge vessel to remove residual monomers, diluents and/or any other unwanted impurities therefrom. In accordance with the present invention, the polymer is contacted, normally in such a discharge vessel, with at least one alcohol of the formula

R'' - OH

wherein R'' is a $C_1$-$C_{10}$ alkyl, alkenyl, aryl, alkaryl or aralkyl group, preferably a $C_1$-$C_{10}$ alkyl or alkenyl group and most preferably a $C_1$-$C_{10}$ alkyl group. Suitable alkyl alcohols are methanol, ethanol, propanol, isopropanol, n-butyl alcohol, sec-butyl alcohol, tert-butyl alcohol, n-pentyl alcohol, isopentyl alcohol, tert-pentyl alcohol, n-hexyl alcohol, n-heptyl alcohol, n-octyl alcohol, and n-decyl alcohol.

Suitable cycloalkyl alcohols are cyclobutanol, cyclopentanol, cyclohexanol and cycloheptanol. Suitable alkenyl alcohols are allyl alcohol (also known as 1-pentenol), 1-butenol, and 3-butene-2-ol.

Benzyl alcohol is a suitable aryl alcohol, and α- and β-phenylethyl alcohols are suitable alkaryl alcohols.

Methanol, ethanol, propanol and isopropanol are the preferred alcohols, and methanol is the most preferred alcohol.

The amount of the alcohol used to treat the polymer is at least about stoichiometrically equivalent to the molar amount of the metal of the catalyst activator in the polymer resin, preferably it is at least about twice the molar amount of the metal of the catalyst activator in the polymer resin, and most preferably it is about three to about six times of the molar amount of the metal of the catalyst activator, i.e., the alcohol to activator metal molar ratio is at least about 1:1, preferably at least about 2:1 and most preferably about 3:1 to about 6:1. The alcohol may be used in its pure form or as a solution with a suitable gaseous solvent, e.g., nitrogen, or as mixtures with other alcohols. The term "molar amount of the metal of the catalyst activator in the polymer resin" is used herein to define the amount, expressed in moles, of the activator metal in the polymer after the polymerization is substantially completed, i.e., after the polymer is removed from the polymerization vessel.

The polymer resin must be contacted with the alcohol in the vapor phase, since it was found that the contact of the resin with the vapor phase alcohol facilitates a rapid and thorough penetration of the alcohol throughout the polymer resin particles and improves the efficiency of the process as compared to prior art processes, wherein alcohols in the liquid state were used to remove or wash out the residual catalyst from the polymer resin. The present process does not rely on the removal of catalyst residue from the polymer resin to eliminate the odor and discoloration of the products made from the resin. Instead, without wishing to be bound by any particular theory of operability, it is believed that in the process of this invention the alcohol inactivates the residual amounts of the catalyst activator remaining in the resin, thereby diminishing or eliminating the formation of oxidative activator residues believed responsible for the odor and discoloration of the products made from the resin. To assure that the resin is contacted with the vapor phase alcohol, the alcohol is preferably introduced into the vessel, wherein the contacting takes place, in a vapor phase. Alternatively, the alcohol may be introduced in the form of a fine atomized mist in an inert diluent, e.g., nitrogen, into the vessel maintained at such a temperature that it is higher than the dew point of the alcohol (or a mixture of alcohols) at the pressure of the vessel and the alcohol concentration therein. In any event, throughout the period of treatment of the resin with the alcohol, the vessel must be maintained at the temperature higher than the dew point of the alcohol in the vessel to assure that the alcohol (or a mixture of alcohols) is maintained in vapor phase throughout the time of contact of the polymer resin with the alcohol.

After the contact of the polymer resin with the alcohol is completed, any remaining alcohol is removed from the vessel and it is recycled or flared. The resin is also removed from the vessel and conducted to conventional downstream processing operations.

The use of the alcohol in the vapor phase thus provides additional process advantages as compared to the prior art processes wherein liquid alcohol was used to wash out the remainder of the catalyst from the resin. In the present invention, the resin particles need not be physically separated from liquid alcohol in expensive and elaborate solid-liquid separation equipment. The resin particles also need not be dried after the treatment with the alcohol is completed. Thus, the process of the present invention is greatly simplified and more economical as compared to the aforementioned prior art processes requiring washing out of the catalyst residue from the resin with liquid alcohol, separation of the solid resin from the liquid alcohol and drying of the resin. The process of this invention also does not require the use of chemically active ingredients other than alcohol, in contrast to some prior art processes which relied on the use of mixtures of two or more chemically active ingredients, in a liquid phase, to physically remove catalyst residue from the polymer (e.g., see Ainsworth, Jr. et al, U.S. Patent 3,773,743).

The invention will now be described in conjunction with one exemplary embodiment thereof schematically illustrated in the enclosed figure. This exemplary embodiment is directed to a fluidized bed alpha-olefin polymerization reaction. However, it will be apparent to those skilled in the art from the above description of the invention that it is not limited to fluidized bed alpha-olefin polymerization reactions.

The Figure is a schematic representation of a typical fluidized bed polymerization process for polymerizing linear low density polyethylene from ethylene and 1-hexene wherein the process of this invention may be carried out. With reference to the Figure, a fluid bed reactor 1 is operated at about 220° kPa (300 psig) total pressure. Monomer feed is introduced into the reactor through a conduit 3 and a particulate catalyst feed through a conduit 5. Typical monomer feed is comprised of ethylene and 1-hexene, both of which may be introduced through the conduit 3, or, alternatively, ethylene may be introduced into the reactor through a conduit 3 and 1-hexene through a separate conduit, not shown in the Figure. Nitrogen make-up feed is introduced into the reactor through a conduit 7 to control the ethylene partial pressure within the reactor. At a constant total reactor pressure, a high rate of nitrogen feed increases the nitrogen partial pressure in the reactor and lowers the ethylene partial pressure.

After the monomers are copolymerized in the reactor, the polymer product is withdrawn from the fluid bed reactor and conducted to a two-vessel product discharge system comprised of a product chamber 9 and a product blow tank 13, arranged in series. As shown in the Figure, the product is first conducted from the reactor 1 into the product chamber 9 through a product valve 6. The product chamber is thereafter sealed from the reactor by closing product valve 6. The product is conducted to a product blow tank 13 through a valved conduit 10. A stream of nitrogen is introduced into the product blow tank 13 through a conduit 11 to aid in conveying the product from the product discharge system into the purge bin. Thus, the product is conveyed through a line 15 to the product purge bin 17 containing conventional filters 18 in the upstream portion thereof. A stream of an inert purge gas, such as nitrogen, is introduced into the downstream portion of the purge bin through a conduit 21 to remove any unpolymerized monomers from the product and from the system. Such unpolymerized monomers, in the stream of the inert gas, are removed from the purge bin through a conduit 19 and are typically conducted to a flare to be burned. The product polymer is removed from the purge bin through a conventional airlock device 23 and then conducted to conventional storage facilities through a conduit 25.

In accordance with the present invention, at least one alcohol, e.g., methanol, is introduced in a vapor phase into the product purge bin 17 together with the stream of the inert purge gas through a conduit 21 or separately through a separate conduit, not shown in the Figure. The alcohol is introduced into the purge bin at a rate sufficient to provide in the purge bin the required molar ratio of the alcohol to the metal of the catalyst activator, as defined above. The purge bin 17 is maintained at the temperature greater than the dew point of the alcohol at the pressure of the bin. Thus, if a solution of methanol in nitrogen, comprising about 6% by mole of methanol, is introduced into the bin, the bin 17, operated at a pressure of about 140 kPa (5 psig), must be maintained at the temperature higher than about 12°C to assure that the treatment of the resin in the bin is conducted with methanol in the vapor phase. Since the purge bin in the exemplary process described above and illustrated in the attached Figure is usually operated at about 85°C, the methanol therein is maintained in the vapor phase. The alcohol-treated product is removed from the purge bin in the manner described above.

The contacting of the polymer with the gaseous alcohol produces resins which, in turn, produce molded products having a whitish, translucent appearance. Such molded products also have no noticeable odor. In contrast, molded products manufactured from resins which are not treated with the gaseous alcohol have a slight yellow tint and an objectionable odor.

It will be apparent to those skilled in the art that the specific embodiments discussed above can be successfully repeated with ingredients equivalent to those generically or specifically set forth above and under variable process conditions.

From the foregoing specification, one skilled in the art can readily ascertain the essential features of this invention and without departing from the spirit and scope thereof can adapt it to various diverse applications.

## Claims

1. In a process of preparing a polymer resin of at least one $C_2$-$C_{10}$ alpha-olefin comprising conducting the polymerization in the presence of a high activity catalyst composition having a productivity of at least 500 grams of polymer per gram of catalyst per hour, the catalyst composition comprising magnesium or a compound thereof, a transition metal or a compound thereof, a halogen or a compound thereof, and a catalyst activator, characterized in that the polymer resin, after the polymerization is substantially completed, is contacted with at least one alcohol in a vapor phase of the formula

R″ - OH

wherein R″ is a $C_1$-$C_{10}$ alkyl, alkenyl, aryl, alkaryl or aralkyl group, the amount of the alcohol being at least about stoichiometrically equivalent to the molar amount of metal of the catalyst activator in the polymer resin, the temperature at which the polymer resin is contacted with the alcohol being higher than the dew point of the alcohol at the conditions at which the polymer resin is contacted with the alcohol.

2. A process of claim 1 wherein R″ is a $C_1$-$C_{10}$ alkyl or alkenyl group.

3. A process of claim 1 or 2 wherein alcohol is methanol, ethanol, propanol or isopropanol.

4. A process of claim 1 2, 3 or 4 wherein the amount of the alcohol is at least about twice the molar amount of the metal of the catalyst activator in the polymer resin.

5. A process of claim 4 wherein the amount of the alcohol is at least about three to about six times of the molar amount of the metal of the catalyst activator in the polymer resin.

6. A process of claim 1, 2, 3, 4, or 5 wherein the alcohol is methanol.

0253616

F-4027

MONOMER
FEED

CATALYST
FEED

FIGURE 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 87, no. 14, 3rd October 1977, page 24, abstract no. 102999w, Columbus, Ohio, US; & JP-A-77 05 956 (MITSUBISHI PETROCHEMICAL CO. LTD) 17-02-1977 * Abstract * | 1-3 | C 08 F 6/08<br>C 08 F 10/00 |
| | --- | | |
| X | CHEMICAL ABSTRACTS, vol. 92, no. 8, February 1980, page 17, abstract no. 59451a, Columbus, Ohio, US; & JP-A-79 119 587 (SUMITOMO CHEMICAL CO. LTD) 17-09-1979 * Abstract * | 1 | |
| | ----- | | |

TECHNICAL FIELDS
SEARCHED (Int. Cl.4)

C 08 F

The present search report has been drawn up for all claims

| Place of search | Date of completion of the search | Examiner |
|---|---|---|
| THE HAGUE | 19-10-1987 | DE ROECK R.G. |